# EUROPÄISCHE PATENTSCHRIFT

(11) **EP 0 884 945 B1**
(45) Veröffentlichungstag und Bekanntmachung des Hinweises auf die Patenterteilung: **12.06.2002**
(21) Anmeldenummer: 97908173.4
(22) Anmeldetag: 04.03.1997
(51) Int. Cl.: A01N 33/04, A01N 25/10

(54) **VERWENDUNG VON POLYMERISATEN ALS BIOZID**
USE OF POLYMERS AS BIOCIDES
EMPLOI DE POLYMERES COMME BIOCIDES

(30) Priorität: 06.03.1996 DE 19608555
(43) Veröffentlichungstag der Anmeldung: 23.12.1998
(73) Patentinhaber: BASF AKTIENGESELLSCHAFT, 67056 Ludwigshafen (DE)
(72) Erfinder: GEBHARDT, Norbert, D-67434 Neustadt (DE); ZELLER, Dieter, D-69168 Wiesloch (DE); NILZ, Claudia, D-67127 Rödersheim-Gronau (DE); STEUERLE, Ulrich, D-69124 Heidelberg (DE); JOHANSEN, Charlotte, DK-2840 Holte (DK)
(86) Internationale Anmeldenummer: EP9701082
(87) Internationale Veröffentlichungsnummer: WO9732477

(56) Entgegenhaltungen:
- EP-A- 0 071 050
- EP-A- 0 216 387
- US-A- 3 714 259
- US-A- 4 463 193
- MAKROMOLEKULARE CHEMIE, MACROMOLECULAR CHEMISTRY AND PHYSICS, SUPPLEMENTS, Bd. 9, 1985, BASEL CH, Seiten 25-33, XP002033696 E.F. PANIRIN ET AL.: "Biological activity of cationic polymers." in der Anmeldung erwähnt

## Beschreibung

Die Erfindung betrifft die Verwendung von Polymerisaten, die
(a) 10 bis 90 mol-% Vinylamin- oder Ethylenimin-Einheiten,
(b) 10 bis 90 mol-% Einheiten mindestens eines Monomers aus der Gruppe, bestehend aus N-Vinylcarbonsäureamiden, Vinylformiat, Vinylacetat, Vinylpropionat, Vinylalkohol, C₁- bis C₆-Alkylvinylether, monoethylenisch ungesättigten C₃- bis C₈-Carbonsäuren, deren Ester, Nitrile, Amide und Anhydride, N-Vinylharnstoff, N-Vinylimidazolen und N-Vinylimidazolinen und
(c) 0 bis 5 mol-% Einheiten von Monomeren mit mindestens zwei ethylenisch ungesättigten Doppelbindungen,
einpolymerisiert enthalten, wobei die Summe aus (a), (b) und (c) in mol-% immer 100 beträgt, als Biozid.

Aus Z. Chem., Band 27, 1 (1987) sind speziell funktionalisierte Polyvinylalkohole, Polyacrylate und Polyethylenimine zur Immobilisierung von antimikrobiell wirksamen Substanzen bekannt. Die Wirkstoffe werden bei der Anwendung solcher Systeme kontrolliert freigesetzt. Die antimikrobielle Wirksamkeit beruht jedoch nach den Angaben in der Veröffentlichung auf der Freisetzung der bioziden Wirkstoffe.

Aus der SU-A-1 071 630 ist bekannt, daß Copolymerisate aus Diallyldimethylammoniumchlorid und Natriumacrylat eine bakterizide Wirksamkeit aufweisen. Aus der EP-A-0 331 528 sind Copolymere aus Ethylen und Dialkylaminoalkylacrylamiden mit biozider Wirksamkeit bekannt. Über antimikrobiell wirksame Polymerisate, die Vinylphosphonium- und Vinylsulfonium-Gruppen enthalten, wurde in J. Polym. Sci. Part A: Polym. Chem., Band 31, 335, 1441, 1467 und 2873 (1993) sowie in Arch. Pharm. (Weinheim) 321, 89 (1988) berichtet. Biozid wirksame Copolymerisate aus N-Vinylpyrrolidon und Vinylaminen sind aus Makromol. Chem., Suppl. Band 9, 25 (1985) bekannt. Der vorliegenden Erfindung liegt die Aufgabe zugrunde, neue biozide Mittel zur Verfügung zu stellen.

Die Aufgabe wird erfindungsgemäß gelöst mit der Verwendung von Polymerisaten, die
(a) 10 bis 90 mol-% Vinylamin- oder Ethylenimin-Einheiten,
(b) 10 bis 90 mol-% Einheiten mindestens eines Monomers aus der Gruppe, bestehend aus N-Vinylcarbonsäureamiden der Formel 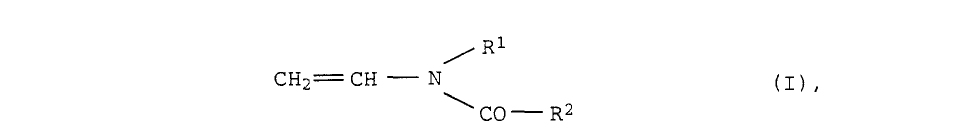 in der R¹, R² = H oder C₁- bis C₆-Alkyl bedeuten,
   Vinylformiat, Vinylacetat, Vinylpropionat, Vinylalkohol, C₁bis C₆-Alkylvinylether, monoethylenisch ungesättigten C₃- bis C₈-Carbonsäuren, deren Ester, Nitrile, Amide und Anhydride, N-Vinylharnstoff, N-Vinylimidazolen und N-Vinylimidazolinen und
(c) 0 bis 5 mol-% Einheiten von Monomeren mit mindestens zwei ethylenisch ungesättigten Doppelbindungen,
einpolymerisiert enthalten, wobei die Summe aus (a), (b) und (c) in mol-% immer 100 beträgt, als Biozid.

Die oben beschriebenen Polymerisate sind aus dem Stand der Technik bekannt, vgl. EP-B-0 071 050 und EP-B-0 216 387. Die Vinylamin-Einheiten enthaltenden Polymerisate sind beispielsweise dadurch erhältlich, daß man Mischungen polymerisiert, die
(a) 10 bis 90 mol-% offenkettige N-Vinylcarbonsäureamide der oben angegebenen Formel I,
(b) 10 bis 90 mol-% mindestens eines Monomers aus der Gruppe, bestehend aus Vinylformiat, Vinylacetat, Vinylpropionat, C₁bis C₆-Alkylvinylether, monoethylenisch ungesättigten C₃- bis C₈-Carbonsäuren, deren Ester, Nitrile, Amide und Anhydride, N-Vinylimidazolen und N-Vinylimidazolinen und
(c) 0 bis 5 mol-% mindestens eines Monomeren mit mindestenszwei ethylenisch ungesättigten Doppelbindungen,
polymerisiert und anschließend die Gruppe 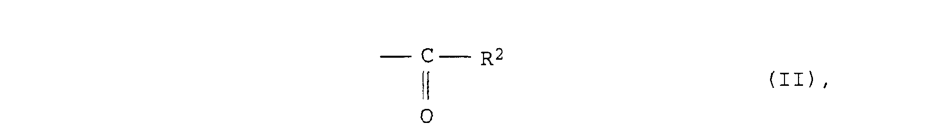 in der R² die in Formel I angegebene Bedeutung hat,
partiell oder vollständig aus den einpolymerisierten Monomeren der Formel I abspaltet.

Offenkettige N-Vinylcarbonsäureamide der Formel I sind beispielsweise N-Vinylformamid, N-Vinyl-N-Methylformamid, N-Vinylacetamid, N-Vinyl-N-Methylacetamid, N-Vinyl-N-Ethylacetamid, N-Vinyl-N-Methylpropionamid und N-Vinylpropionamid. Die offenkettigen Vinylcarbonsäureamide können allein oder in Mischung bei der Polymerisation eingesetzt werden. Vorzugsweise verwendet man aus dieser Gruppe von Monomeren N-Vinylformamid.

Außerdem eignen sich solche Ethylenimin-Einheiten enthaltenden Polymeren, die durch Pfropfen von Polyamidoaminen mit Ethylenimin oder durch Pfropfen von Polymerisaten offenkettiger N-Vinylcarbonsäureamide der Formel I mit Ethylenimin erhältlich sind. Gepfropfte Polyamidoamine sind beispielsweise aus der US-A-4 144 123 bekannt.

Die erfindungsgemäß zu verwendenden Polymerisate enthalten als Komponente (a) 10 bis 90 mol-% Vinylamin- oder Ethylenimin-Einheiten.

Vinylamin-Einheiten enthaltende Polymerisate können dadurch modifiziert werden, daß man bei der Herstellung die Monomeren der Formel I mit anderen Monomeren copolymerisiert. Zu den in Betracht kommenden Monomeren gehören Vinylformiat, Vinylacetat, Vinylpropionat, C₁- bis C₆-Alkylvinylether, monoethylenisch ungesättigte C₃- bis C₈-Carbonsäuren, deren Ester, Nitrile, Amide und soweit zugänglich auch die Anhydride, N-Vinylharnstoff, N-Vinylimidazole und N-Vinylimidazoline. Beispiele für die genannten Monomeren der Gruppe (b) sind Vinylester gesättigter Carbonsäuren mit 1 bis 6 Kohlenstoffatomen, wie Vinylformiat, Vinylacetat, Vinylpropionat und Vinylbutyrat, monoethylenisch ungesättigte C₃- bis C₈-Carbonsäuren, wie Acrylsäure, Methacrylsäure, Dimethylacrylsäure, Ethacrylsäure, Crotonsäure, Vinylessigsäure, Allylessigsäure, Maleinsäure, Fumarsäure, Citraconsäure und Itaconsäure sowie deren Ester, Anhydride, Amide und Nitrile. Bevorzugt eingesetzte Anhydride sind beispielsweise Maleinsäureanhydrid, Citraconsäureanhydrid und Itaconsäureanhydrid.

Geeignete Ester, die sich beispielsweise von Alkoholen mit 1 bis 6 C-Atomen ableiten, sind Methylacrylat, Methylmethacrylat, Ethylacrylat, Ethylmethacrylat, Isobutylacrylat, Hexylacrylat oder Glykole oder Polyalkylenglykole, wobei jeweils nur eine OH-Gruppe der Glykole oder Polyglykole mit einer monoethylenisch ungesättigten Carbonsäure verestert ist, z.B. Hydroxyethylacrylat, Hydroxymethacrylat, Hydroxypropylacrylat, Hydroxypropylmethacrylat, Hydroxybutylacrylat und Hydroxybutylmethacrylat. Außerdem eignen sich Acrylsäuremonoester und Methacrylsäuremonoester von Polyalkylenglykolen eines Molekulargewichts bis zu 10000, vorzugsweise 1500 bis 9000 und Ester der genannten Carbonsäuren mit Aminoalkoholen, z.B. Dimethylaminoethylacrylat, Dimethylaminoethylmethacrylat, Diethylaminoethylacrylat, Diethylaminoethylmethylacrylat, Dimethylaminopropylacrylat und Dimethylaminopropylmethacrylat. Geeignete Amide sind beispielsweise Acrylamid und Methacrylamid. Die basischen Acrylate können in Form der freien Basen, der Salze mit Mineralsäuren oder Carbonsäuren oder auch in quaternierter Form eingesetzt werden. Außerdem eignen sich als Comonomere Acrylnitril, Methacrylnitril, N-Vinylimidazol sowie substituierte N-Vinylimidazole wie N-Vinyl-2-methylimidazol und N-Vinyl-2-ethylimidazol, N-Vinylimidazolin und substituierte N-Vinylimidazoline, z.B. N-Vinyl-2-methylimidazolin. Außer den genannten Monomeren können auch Sulfogruppen enthaltende Monomere wie beispielsweise Vinylsulfonsäure, Allylsulfonsäure, Styrolsulfonsäure und Acrylsäure-3-sulfopropylester als andere monoethylenisch ungesättigte Monomere eingesetzt werden.

Die Vinylamineinheiten enthaltenden Polymerisate enthalten vorzugsweise
(a) 10 bis 90 mol-% Vinylamin-Einheiten und
(b) 10 bis 90 mol-% Einheiten von Monomeren aus der Gruppe von offenkettigen N-Vinylcarbonsäureamiden, Vinylformiat, Vinylacetat, Vinylpropionat, C₁- bis C₆-Alkylvinylether, N-Vinylharnstoff, Acrylsäure, Methacrylsäure, Maleinsäure sowie die Anhydride, Ester, Nitrile und Amide der genannten Carbonsäuren, N-Vinylimidazole, N-Vinylimidazoline und/oder Vinylalkohol-Einheiten, wobei die Summe aus (a), (b) und (c) in mol-% immer 100 beträgt.

Die Vinylamin-Einheiten enthaltenden Polymerisate können noch dahingehend modifiziert werden, daß man bei der Copolymerisation Monomermischungen einsetzt, die als Comonomer (c) bis zu 5 mol-% einer mindestens zwei ethylenisch ungesättigte Doppelbindungen im Molekül aufweisenden Verbindung enthalten. Es entstehen dann vernetzte Copolymerisate, die bis zu 5 mol-%-Einheiten von Monomeren mit mindestens zwei ethylenisch ungesättigten Doppelbindungen im Molekül einpolymerisiert enthalten. Falls Vernetzer bei der Copolymerisation eingesetzt werden, beträgt die bevorzugt verwendete Menge 0,05 bis 2 mol-%. Die Mitverwendung der Monomeren (c) bewirkt eine Molgewichtserhöhung der Copolymerisate. Geeignete Verbindungen dieser Art sind beispielsweise Methylen-bis-acrylamid, Ester von Acrylsäure oder Methacrylsäure mit mehrwertigen Alkoholen, z.B. Glykoldimethacrylat oder Glycerintrimethacrylat sowie mindestens zweifach mit Acrylsäure oder Methacrylsäure veresterte Polyole, wie Pentaerythrit und Glucose. Geeignete Vernetzer sind außerdem Divinylethylenharnstoff, Divinylbenzol, N,N'-Divinylharnstoff, Divinyldioxan, Pentaerythrittriallylether und Pentaallylsucrose. Vorzugsweise verwendet man aus dieser Gruppe von Verbindungen wasserlösliche Monomere, beispielsweise Glykoldiacrylat oder Glykoldiacrylate oder Glykoldimethacrylate von Polyethylenglykolen eines Molekulargewichts bis zu 3000.

Die Copolymerisate haben K-Werte von 5 bis 300, vorzugsweise 10 bis 200, Die K-Werte werden bestimmt nach H. Fikentscher in 5 %iger wäßriger Kochsalzlösung bei pH 7, einer Temperatur von 25°C und einer Polymerkonzentration von 0,5 Gew.-%.

Die Vinylamin-Einheiten enthaltenden Polymerisate werden nach bekannten Verfahren durch Polymerisieren von offenkettigen N-Vinylcarbonsäureamiden der Formel I mit
(b) 10 bis 90 mol-% mindestens eines Monomers aus der Gruppe, bestehend aus Vinylformiat, Vinylacetat, Vinylpropionat, C₁- bis C₆-Alkylvinylether, monoethylenisch ungesättigten C₃- bis C₈-Carbonsäuren, deren Ester, Nitrile, Amide und Anhydride, N-Vinylimidazolen und N-Vinylimidazolinen und
(c) 0 bis 5 mol-% mindestens eines Monomeren mit mindestens zwei ethylenisch ungesättigten Doppelbindungen
in Gegenwart oder auch in Abwesenheit von inerten Löse- oder Verdünnungsmitteln hergestellt. Danach erfolgt in einer polymeranalogen Reaktion die Abspaltung der -CO-R²-Gruppen unter Bildung von Vinylamin-Einheiten. Da die Polymerisation in Abwesenheit von inerten Löse- oder Verdünnungsmitteln meistens zu uneinheitlichen Polymerisaten führt, ist die Polymerisation in einem inerten Löse- oder Verdünnungsmittel bevorzugt. Geeignet sind beispielsweise solche inerten Verdünnungsmittel, in denen die offenkettigen N-Vinylcarbonsäureamide löslich sind. Für die Lösungspolymerisation eignen sich beispielsweise inerte Lösemittel wie Methanol, Ethanol, Isopropanol, n-Propanol, n-Butanol, sec.-Butanol, Tetrahydrofuran, Dioxan, Wasser sowie Mischungen der genannten inerten Lösemittel. Die Polymerisation kann kontinuierlich oder diskontinuierlich durchgeführt werden. Sie erfolgt in Gegenwart von Radikale bildenden Polymerisationsinitiatoren, die beispielsweise in Mengen von 0,01 bis 20, vorzugsweise 0,05 bis 10 Gew.-%, bezogen auf die Monomeren, eingesetzt werden. Die Polymerisation kann gegebenenfalls allein durch Einwirkung von energiereicher Strahlung, z.B. Elektronenstrahlen oder UV-Strahlen initiiert werden.

Um Polymerisate mit niedrigem K-Wert, z.B. von 5 bis 50, vorzugsweise 10 bis 30, herzustellen, wird die Polymerisation zweckmäßigerweise in Gegenwart von Reglern durchgeführt. Geeignete Regler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Die Polymerisation der Monomeren erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Monomeren diskontinuierlich copolymerisieren, indem man das Reaktionsgemisch auf die Polymerisationstemperatur erhitzt und dann die Reaktion ablaufen läßt. Diese Temperaturen liegen dabei im Bereich von 40 bis 180°C, wobei unter Normaldruck, vermindertem oder auch erhöhtem Druck gearbeitet werden kann. Polymerisate mit einem hohen Molekulargewicht erhält man, wenn man die Polymerisation in Wasser durchführt. Dies kann beispielsweise für die Herstellung wasserlöslicher Polymerisate in wäßriger Lösung, als Wasser-in-Öl-Emulsion oder nach dem Verfahren der umgekehrten Suspensionspolymerisation erfolgen.

Um eine Verseifung der monomeren N-Vinylcarbonsäureamide während der Polymerisation in wäßriger Lösung zu vermeiden, führt man die Polymerisation vorzugsweise in einem pH-Wert-Bereich von 4 bis 9, insbesondere von 5 bis 8 durch. In vielen Fällen empfiehlt es sich, zusätzlich noch in Gegenwart von Puffern zu arbeiten, z.B. zur wäßrigen Phase primäres oder sekundäres Natriumphosphat zuzusetzen.

Aus den oben beschriebenen Polymerisaten erhält man durch Abspaltung von Gruppen der Formel 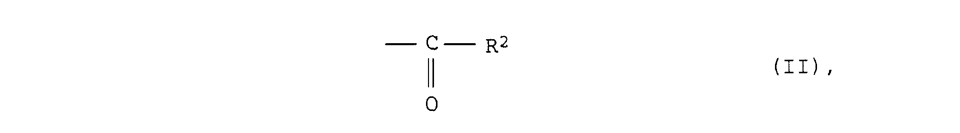 aus den Monomer-Einheiten der Formel III unter Bildung von Aminbzw. Ammoniumgruppen die erfindungsgemäß zu verwendenden Vinylamin-Einheiten enthaltenden Polymerisate:

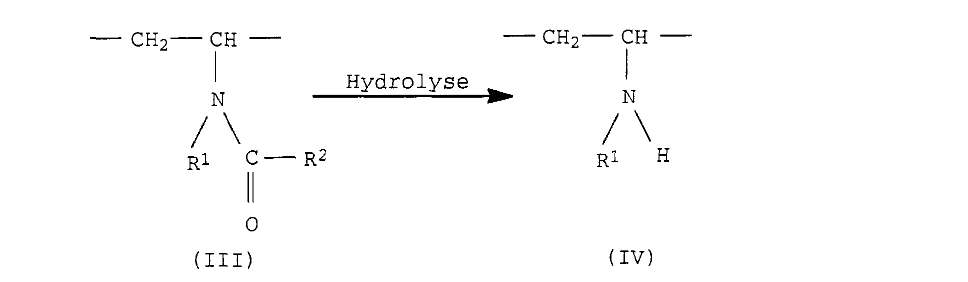

Die Substituenten R¹ und R² haben in den Formeln (II) bis (IV) jeweils die in Formel I angegebene Bedeutung.

Die Hydrolyse wird vorzugsweise in Gegenwart von Wasser unter Einwirkung von Säuren, Basen oder Enzymen durchgeführt, kann jedoch auch in Abwesenheit von Säuren, Basen oder Enzymen erfolgen. In Abhängigkeit von den Reaktionsbedingungen bei der Hydrolyse, d.h. der Menge an Säure oder Base, bezogen auf das zu hydrolysierende Polymerisat, und der Reaktionstemperatur bei der Hydrolyse erhält man verschiedene Hydrolysegrade. Die Hydrolyse wird so weit geführt, daß 0,1 bis 100 mol-%, vorzugsweise 1 bis 99 mol-%, der einpolymerisierten Monomereinheiten III aus dem Polymer abgespalten werden. Besonders bevorzugt werden erfindungsgemäß solche Polymerisate eingesetzt, die 10 bis 90 mol-% Vinylamin-Einheiten und 10 bis 90 mol-% Einheiten der Formel III, vorzugsweise N-Vinylformamid-Einheiten enthalten, wobei die Summe der Angaben in mol-% immer 100 beträgt.

Für die Hydrolyse geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphosphorsäure) und organische Säuren, z.B. C₁- bis C₅-Carbonsäuren, wie Ameisensäure, Essigsäure und Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man beispielsweise 0,05 bis 1,5 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Calciumhydroxid, Strontiumhydroxid und Bariumhydroxid. Ebenso können aber auch Ammoniak und Alkylderivate des Ammoniaks verwendet werden, z.B. Alkyl- oder Arylamine z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge. Die Hydrolyse im sauren oder im alkalischen pH-Bereich erfolgt z.B. bei Temperaturen von 30 bis 170, vorzugsweise 50 bis 120°C. Sie ist nach etwa 2 bis 8, vorzugsweise 3 bis 5 Stunden beendet. Besonders bewährt hat sich eine Verfahrensweise, bei der zur Hydrolyse die Basen oder Säuren in wäßriger Lösung zugesetzt werden. Nach der Hydrolyse führt man i.a. eine Neutralisation durch, so daß der pH-Wert der hydrolysierten Polymerlösung 2 bis 8, vorzugsweise 3 bis 7 beträgt. Die Neutralisation ist dann erforderlich, wenn ein Fortschreiten der Hydrolyse von teilweise hydrolysierten Polymerisaten vermieden oder verzögert werden soll. Die Hydrolyse kann auch mit Hilfe von Enzymen vorgenommen werden.

Bei der Hydrolyse von Copolymerisaten aus offenkettigen N-Vinylcarbonsäureamiden der Formel I und mindestens einem der oben genannten in Betracht kommenden Comonomeren tritt gegebenenfalls eine weitere Modifizierung der Polymerisate dadurch ein, daß die einpolymerisierten Comonomeren ebenfalls hydrolysiert werden. So entstehen beispielsweise aus einpolymerisierten Einheiten von Vinylestern Vinylalkohol-Einheiten. In Abhängigkeit von den Hydrolysebedingungen können die einpolymerisierten Vinylester vollständig oder partiell hydrolysiert sein. Bei einer partiellen Hydrolyse von Vinylacetat-Einheiten einpolymerisiert enthaltenden Copolymerisaten entfällt das hydrolysierte Copolymerisat neben unveränderten Vinylacetat-Einheiten Vinylalkohol-Einheiten sowie Einheiten der Formeln III und IV. Aus Einheiten monoethylenisch ungesättigter Carbonsäureanhydride entstehen bei der Hydrolyse Carbonsäure-Einheiten. Einpolymerisierte monoethylenisch ungesättigte Carbonsäuren werden bei der Hydrolyse chemisch nicht verändert. Dagegen verseifen Ester- und Amid-Einheiten zu Carbonsäure-Einheiten. Aus einpolymerisierten monoethylenisch ungesättigten Nitrilen entstehen beispielsweise Einheiten von Amiden oder Carbonsäuren. Aus einpolymerisiertem N-Vinylharnstoff können ebenfalls Vinylamin-Einheiten gebildet werden. Der Hydrolysegrad der einpolymerisierten Comonomeren kann analytisch leicht bestimmt werden.

Vorzugsweise verwendet man Polymerisate, die
(a) Vinylamin-Einheiten und
(b) N-Vinylformamid-, Vinylformiat-, Vinylacetat-, Vinylpropionat-, Vinylalkohol- und/oder N-Vinylharnstoff-Einheiten
einpolymerisiert enthalten. Vorzugsweise einzusetzende Polymerisate enthalten
(a) 10 bis 90 mol-% Vinylamin-Einheiten oder Ethylenimin-Einheiten und
(b) 10 bis 90 mol-% N-Vinylformamid-Einheiten.

Bei diesen Polymerisaten handelt es sich z.B. um partiell hydrolysierte Homopolymerisate des Vinylformamids.

Die partiell hydrolysierten Homopolymerisate von N-Vinylformamid enthalten bevorzugt
(a) 10 bis 90 mol-% Vinylamin-Einheiten und
(b) 10 bis 90 mol-% N-Vinylformamid-Einheiten
einpolymerisiert und haben einen K-Wert von 5 bis 300, bevorzugt 10 bis 120 (bestimmt nach H. Fikentscher in 5 gew.-%iger wäßriger Kochsalzlösung bei 25°C und pH 7 und einer Polymerkonzentration von 0,5 Gew.-%).

Die Summe von (a) und (b) in mol-% beträgt immer 100.

Die oben beschriebenen Polymerisate besitzen eine sehr gute Wirkung gegen Mikroorganismen. Sie haben mikrobizide und mikrobistatische Eigenschaften. Sie eignen sich daher als biozide Wirkstoffe bei der Herstellung von Desinfektionsmitteln sowie als Wirkstoffe für die Konservierung von technischen Produkten wie Dispersionen, Emulsionen, Farben, Lacken, Bohr- und Schneidölen sowie Wasch- und Reinigungsmitteln. Sie können auch als biozide Wirkstoffe bei der Papierherstellung, z.B. zur Schleimbekämpfung, eingesetzt werden. Sie sind ferner zur bioziden Ausrüstung von technischen Produkten wie Anstrichen, Geweben, Vliesen sowie Teppichbeschichtungen geeignet und können außerdem zum Schutz von beispielsweise Kühlwasserkreisläufen und anderen technischen wasserführenden Systemen gegen mikrobielle Kontamination verwendet werden. Die erfindungsgemäß zu verwendenden Polymerisate können in allen Wasch- und Reinigungsmitteln verwendet werden. Geeignete Zusammensetzungen für Wasch- und Reinigungsmittel sind beispielsweise in R.D. Nr. 377 26 (1995) angegeben.

Die K-Werte der Polymerisate wurden nach H. Fikentscher, Cellulose-Chemie, Band 13, 58 bis 64 und 71 bis 74 (1932) in 5 gew.-%iger wäßriger Kochsalzlösung bei 25°C und pH 7 und einer Polymerkonzentration von 0,5 Gew.-% bestimmt.

Mikrobizide und mikrobistatische Eigenschaften werden experimentell bestimmt. Sehr gut geeignete Prüfmethoden wurden von der Deutschen Gesellschaft für Hygiene und Mikrobiologie (DGHM) für die Prüfung von Desinfektionsmitteln detailliert beschrieben.

Es wurden Röhrchenverdünnungstests gemäß den "Richtlinien für die Prüfung und Bewertung chemischer Desinfektionsverfahren (Stand 01.01.81, Verfahren leicht modifiziert)" mit Caseinpepton-Sojabohnenmehlpepton-Medium durchgeführt. Die Verdünnung erfolgte mit Wasser standardisierter Härte ohne weitere Hilfsmittel wie z.B. Tenside. Die Einstellung des pH-Wertes auf 7,2 ± 0,2 wurde mit 0,1 mol/l NaOH bzw. 0,1 mol/l HCl durchgeführt. Die Abstufung der Prüfkonzentrationen erfolgte gemäß den von der DGHM vorgeschlagenen Konzentrationsstufen. Die Auswertung erfolgte nach 72stündiger Bebrütung bei 36°C.

Die nachfolgende Tabelle 1 gibt die Stammnummern der Mikroorganismen und die "minimal wirksame Konzentration" ("MHK-Wert") an. Die Konzentrationen sind auf den jeweiligen Gehalt an Polymer mit 97 mol-% Vinylamin-Einheiten und 3 mol-% Vinylformamid-Einheiten bezogen. Der K-Wert des Polymerisats betrug 31.

**Tabelle 1**

| (nicht erfindungsgemäß) | | |
|---|---|---|
| Prüfkeim | | MHK-Wert |
| Staphylococcus aureus | ATTC 6538 | 1400 ppm |
| Escherichia coli | ATTC 11229 | 700 ppm |
| Proteus mirabilis | ATTC 14153 | 2100 ppm |
| Pseudomonas aeruginosa | ATTC 15442 | 350 ppm |
| Candida albicans | ATTC 10231 | 700 ppm |

Die biozide Wirkung wurde auch durch Messungen in einer Malthus-Apparatur (Malthus Flexi M 2060, Malthus Instrument Limited) bestimmt. In die äußere Kammer einer Malthus-Apparatur wurden 3 ml TSB-Medium (Tryptone Soya Broth) gegeben. In die innere Kammer wurden 0,5 ml sterile KOH (0,1M) gefüllt. Die zu prüfenden Polymere wurden dem TSB-Medium zugesetzt. Es wurden jeweils Konzentrationsreihen geprüft. Die Medien wurden mit jeweils 10³ koloniebildenden Einheiten per ml [KbE/ml] angeimpft. Anschließend wurde im Malthus Inkubator bebrütet. Wachsende Zellen produzieren CO₂, das sich in der KOH der inneren Kammer löst und dadurch die Leitfähigkeit der KOH ändert. Die Änderung der Leitfähigkeit wird von der Malthus-Apparatur gemessen. Die Detektionszeit für den Beginn des Wachstums wurde aufgezeichnet und ausgewertet.

Mikrobistatische Aktivität war erkennbar, wenn nach dem Animpfen der Wachstumsbeginn verzögert wurde oder ausblieb. Die minimal wirksame Konzentration (MHK-Wert) war die jeweils niedrigste Polymerkonzentration, die das Wachstum über einen Zeitraum von 100 h verhinderte (vgl. die Ergebnisse in den Tabellen 2 und 3).

In Tabelle 2 sind MHK-Werte von Polyvinylamin mit einem K-Wert von 30 für Gram-positive und Gram-negative Prüfkeime angegeben.

**Tabelle 2**

| (nicht erfindungsgemäß) | |
|---|---|
| | MHK-Wert für Polyvinylamin [ppm] |
| | |

| Gram-positive Prüfkeime: | |
|---|---|
| Bacillus subtilis | 500 |
| Listeria monocytogenes | 1000 |
| Staphylococcus aureus | 500 |
| Streptococcus mutans | 500 |
| | |

| Gram-negative Prüfkeime: | |
|---|---|
| Escherichia coli | 4000 |
| Pseudomonas aeruginosa | 4000 |
| Pseudomonas fluorescens | 2000 |
| Shewanella putrefaciens | 1000 |
| Vibrio parahaemolyticus | 1000 |

In Tabelle 3 sind MHK-Werte für verschiedene Polymerisate angegeben.

**Tabelle 3**

| | | MHK-Wert [ppm] für | | | |
|---|---|---|---|---|---|
| | | Bacillus subtilis | Staphylococcus aureus | Pseudomonas fluoreszens | Shewanella putrefaciens |
| a) | Copolymerisat, enthaltend 70 mol-% Vinyl amin-Einheiten und 30 mol-% Vinylalkohol-Einheiten, K-Wert 49 | 100 | 100 | | |
| b) | Copolymerisat, enthaltend 80 mol-% Vinylamin-Einheiten und 20 mol-% N-Vinylharnstoff-Einheiten, K-Wert 80 | 100 | 500 | 2000 | 2000 |

Zur Bestimmung der mikrobiziden Wirkung wurden für alle Prüforganismen von Zellsuspensionen mit 10⁸ KbE/ml Verdünnungsreihen in Faktor 10 Stufen angesetzt. Für jede Verdünnungsstufe wurde die jeweilige Detektionszeit für den Wachstumsbeginn gemessen. Daraus ließen sich Eichkurven ableiten, die KbE/ml Animpfdichte in Abhängigkeit von der Detektionszeit darstellen.

Zu Zellsuspensionen mit 10⁴ KbE/ml wurden die zu prüfenden Polymere gegeben. Nach 30 min wurden mit jeweils 0,1 ml dieser polymerbehandelten Zellsuspension die äußeren Kammern im Malthus-Apparat angeimpft. Die Detektionszeit für den Wachstumsbeginn wurde gemessen. Blieb das Wachstum aus, dann wurde ein Aliquot zur Kontrolle auf Agar ausplattiert.

Mit Hilfe der Eichkurve ließ sich aus der gemessenen Detektionszeit die Anzahl koloniebildender Einheiten rückrechnen, die die Polymerbehandlung überlebt hatten. Eine Division durch die Ausgangskeimzahl (10⁴ KbE/ml) ergab den Abtötungsfaktor.

Durch die indirekte Rückrechnung der KbE nach Polymerbehandlung wurde vermieden, daß KbE direkt aus polymerbehandelten Suspensionen bestimmt werden mußte. Die direkte Bestimmung hätte aufgrund von Flockungen und Zusammenballungen der Bakterien zu Fehlinterpretationen führen können.

Die mikrobizide Aktivität wurde aus dem Abtötungsfaktor für Zellen aus stationärer Wachstumsphase ermittelt. Die minimal wirksame mikrobizide Konzentration (MBC) war diejenige Konzentration, die innerhalb von 30 min die Zahl KbE um 99 % reduzierte. Die Ergebnisse sind in Tabelle 4 angegeben.

**Tabelle 4**

| | MBC-Werte | | | |
|---|---|---|---|---|
| | Streptococcus mutans | Staphylococcus aureus | Pseudommes fluoreszens | Shewanella putrefaciens |
| Polyvinylamin*; K-Wert 30 | 500 | 100 | >2000 | >2000 |
| Copolymerisat, enthaltend 70 mol-% Vinyl amin-Einheiten und 30 mol-% Vinylalkohol-Einheiten, K-Wert 49 | 2000 | 100 | 500 | 500 |
| Copolymerisat, enthaltend 80 mol-% Vinylamin-Einheiten MHK-Wert [ppm] für und 20 mol-% N-Vinylharnstoff-Einheiten, K-Wert 80 | 500 | 100 | 2000 | 2000 |

| | | | | |
|---|---|---|---|---|
| *: nicht erfindungsgemäß. | | | | |

## Patentansprüche

1. Verwendung von Polymerisaten, die
(a) 10 bis 90 Mol-% Vinylamin-Einheiten oder Ethylenimin-Einheiten,
(b) 10 bis 90 Mol-% Einheiten mindestens eines Monomers aus der Gruppe bestehend aus N-Vinylcarbonsäureamiden der Formel 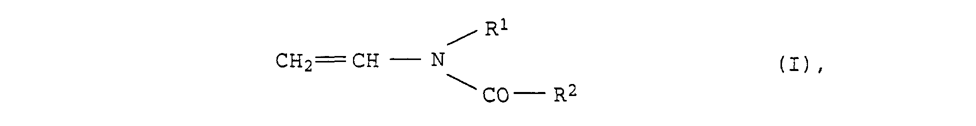 in der R¹, R² = H oder C₁- bis C₆-Alkyl bedeuten,
Vinylformiat, Vinylacetat, Vinylpropionat, Vinylalkohol, C₁- bis C₆-Alkylvinylether, monoethylenisch ungesättigten C₃- bis C₈-Carbonsäuren, deren Ester, Nitrile, Amide und Anhydride, N-Vinylharnstoff, N-Vinylimidazolen und N-Vinylimi dazolinen und
(c) 0 bis 5 Mol-% Einheiten von Monomeren mit mindestens zwei ethylenisch ungesättigten Doppelbindungen
einpolymerisiert enthalten, wobei die Summe aus (a), (b) und (c) in mol-% immer 100 beträgt, als Biozid.

2. Verwendung nach Anspruch 1, **dadurch gekennzeichnet, daß** man Polymerisate einsetzt, die
(a) Vinylamin-Einheiten,
(b) N-Vinylformamid-, Vinylformiat-, Vinylacetat-, Vinylpropionat-, Vinylalkohol- und/oder N-Vinylharnstoff-Einheiten
einpolymerisiert enthalten.

3. Verwendung nach einem der Ansprüche 1 bis 2, **dadurch gekennzeichnet, daß** man Polymerisate einsetzt, die
(a) 10 bis 90 Mol-% Vinylamin-Einheiten und
(b) 10 bis 90 Mol-% N-Vinylformamid-Einheiten
einpolymerisiert enthalten, wobei die Summe aus (a) und (b) und (c) in mol-% immer 100 beträgt und wobei die Polymerisate einen K-Wert von 5 bis 300 (bestimmt nach H-Fikentscher in 5 gew.-%iger wäßriger Kochsalzlösung bei 25°C und pH 7 und einer Polymerkonzentration von 0,5 Gew.-%) haben.

## Claims

1. The use of polymers which contain
(a) 10 to 90 mol% of vinylamine units or ethyleneimine units,
(b) 10 to 90 mol% of units of at least one monomer from the group consisting of N-vinylcarboxamides of the formula 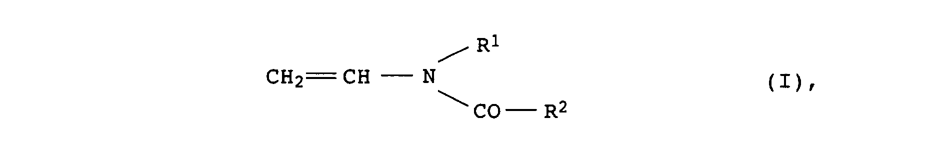 in which R¹, R² = H or C₁- to C₆-alkyl,
vinyl formate, vinyl acetate, vinyl propionate, vinyl alcohol, C₁- to C₆-alkyl vinyl ethers, monoethylenically unsaturated C₃- to C₈-carboxylic acids, their esters, nitriles, amides and anhydrides, N-vinylurea, N-vinylimidazoles and N-vinylimidazolines and
(c) 0 to 5 mol% of units of monomers having at least two ethylenically unsaturated double bonds,
in copolymerized form, the sum of (a), (b) and (c) in mol% always being 100, as biocide.

2. The use as claimed in claim 1, wherein polymers are employed which contain
(a) vinylamine units,
(b) N-vinylformamide, vinyl formate, vinyl acetate, vinyl propionate, vinyl alcohol and/or N-vinylurea units
in copolymerized form.

3. The use as claimed in one of claims 1 to 2, wherein polymers are employed which contain
(a) 10 to 90 mol% of vinylamine units and
(b) 10 to 90 mol% of N-vinylformamide units
in copolymerized form, the sum of (a) and (b) in mol% always being 100 and the polymers having a K value of 5 to 300 (determined according to H. Fikentscher in 5% strength by weight aqueous sodium chloride solution at 25°C and pH7 and a polymer concentration of 0.5% by weight).

## Revendications

1. Utilisation de polymères en tant que biocides, contenant, à l'état polymérisé,
(a) des motifs 'amine vinylique ou éthylène-imine à raison de 10% à 90% en moles,
(b) au moins un monomère choisi dans le groupe formé par les amines de l'acide N-vinylcarboxylique de formule 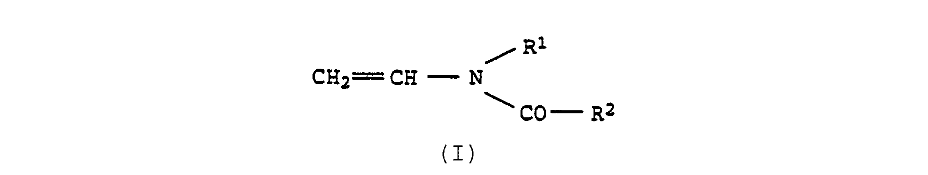 dans laquelle R¹, R² représentent un atome d'hydrogène ou un groupe alkyle en C₁ à C₆, le formiate de vinyle, l'acétate de vinyle, le propionate de vinyle, l'alcool vinylique, l'éther vinylique d'alkyle en C₁ à C₆, les acides carboxyliques en C₃ à C₈ à insaturation monoéthylénique et leurs esters, leurs nitriles, leurs amides et leurs anhydrides, la N-vinylurée, les N-vinylimidazoles et les N-vinyl-imidazolines, à raison de 10% à 90% en moles, et
(c) des motifs de monomères présentant au moins deux double liaisons de type insaturation éthylénique, à raison de 0 à 5% en moles,
où la somme de (a), (b) et (c) vaut toujours 100% en moles.

2. Utilisation selon la revendication 1, **caractérisé en ce que** l'on met en l'oeuvre des polymères contenant, à l'état polymérisé,
(a) des motifs amine vinylique,
(b) les motifs N-vinylformamide, formiate de vinyle, acétate de vinyle, propionate de vinyle, alcool vinylique et/ou N-vinylurée.

3. Utilisation selon l'une quelconque des revendications 1 à 2, **caractérisé en ce que** l'on met en oeuvre les polymères contenant, à l'état polymérisé,
(a) des motifs amine vinylique à raison de 10% à 90% en moles et
(b) des motifs N-vinylformamide à raison de 10% à 90% en moles,
où la somme de (a) et (b) et (c) vaut toujours 100% en moles, et où les polymères présentent une valeur K dans la plage de 5 à 300 (mesuré d'après H-Fikentscher dans une solution aqueuse de chlorure de sodium à 5% en poids, à une température de 25°C, à un pH de 7 et à une concentration en polymère de 0,5% en poids).
